# EUROPÄISCHE PATENTSCHRIFT

(11) **EP 1 886 527 B1**
(45) Veröffentlichungstag und Bekanntmachung des Hinweises auf die Patenterteilung: **30.03.2011**
(21) Anmeldenummer: 06755143.2
(22) Anmeldetag: 11.05.2006
(51) Int. Cl.: H04W 64/00

(54) **LOKALISIERUNGSSYSTEM UND LOKALISIERUNGSVERFAHREN SOWIE MOBILER POSITIONSDATENSENDER**
LOCALIZATION SYSTEM AND LOCALIZATION METHOD AND MOBILE POSITION DATA TRANSMITTER
SYSTEME ET PROCEDE DE LOCALISATION ET EMETTEUR DE DONNEES DE POSITION MOBILE

(30) Priorität: 31.05.2005 DE 102005024874
(43) Veröffentlichungstag der Anmeldung: 13.02.2008
(73) Patentinhaber: Siemens Enterprise Communications GmbH & Co. KG, 81379 München (DE)
(72) Erfinder: BOZIONEK, Bruno, 33178 Borchen (DE); HANNA, Thomas, 32758 Detmold (DE); KUNTE, Klaus-Josef, 33178 Borchen (DE); ZIMMERMANN, Rainer, 33106 Paderborn (DE)
(74) Vertreter: Fritzsche, Thomas
(86) Internationale Anmeldenummer: PCT/EP2006/062230
(87) Internationale Veröffentlichungsnummer: WO 2006/128783

(56) Entgegenhaltungen:
- EP-A- 0 848 564
- EP-A- 0 903 686
- EP-A- 1 519 340
- WO-A-02/091297
- US-A1- 2003 218 532

## Beschreibung

Bei vielen technischen Anwendungen gewinnt die Erreichbarkeit, Auffindbarkeit oder allgemein die Lokalisierung von Personen oder Geräten zunehmend an Bedeutung; so zum Beispiel im logistischen, kommunikationstechnischen oder datenverarbeitungstechnischen Umfeld. Auf einer Lokalisierung oder Selbstlokalisierung von Personen oder Geräten basieren insbesondere viele Anwendungen in mobilen Büroumgebungen, die häufig auch als "Mobile Office" bezeichnet werden. In solchen mobilen Büroumgebungen können verschiedene mobile Benutzer wechselweise verschiedene Endgeräte unter Beibehaltung ihrer jeweiligen persönlichen Konfiguration verwenden.

In mobilen Büroumgebungen werden Benutzer häufig bei Anmeldung an einem Endgerät lokalisiert, das in der Lage ist, seine Position zu ermitteln, oder dessen räumliche oder geographische Position bekannt ist. Eine derartige Benutzerlokalisierung erfordert jedoch eine aktive Handlung des Benutzers zum Aktivieren bzw. Anmelden an einem derartigen Endgerät. Darüber hinaus ist die Einrichtung, Verwaltung und Aktualisierung derartiger Lokalisierungssysteme sehr aufwendig.

Ein weithin bekanntes Lokalisierungssystem ist das so genannte GPS (Global Positioning System), das im Allgemeinen eine sehr genaue Lokalisierung erlaubt. Auf Grund der geringen Feldstärke des GPS-Signals kann dieses jedoch innerhalb von Gebäuden in der Regel nicht empfangen werden. Ein GPSbasiertes Lokalisierungssystem ist somit insbesondere im Büroumfeld und bei gebäudeinternen Logistikanwendungen in der Regel nicht einsetzbar.

Das Dokument EP 0848 564 A2 beschreibt ein Verfahren zur Übermittlung von lokalen Informationen an ein mobiles Sendegerät. Positionsdaten eines Standorts werden beispielsweise durch Auslesen eines Strichcodes oder durch Tasteneingabe in ein mobiles Sendegerät eingeben und von diesem an eine Funkbasisstation übertragen. Basierend auf den Positionsdaten stellt die Funkbasisstation Informationen bereit.

Im Dokument EP 1519 340 A1 ist ein System zum Installieren von Funketiketten beschrieben. Ein Fahrzeug ermittelt über GPS-Empfanger und Kameras eine Position und eine Lage. Die Position und zugehörige Informationen werden auf ein Funketikett übertragen, welches dann an einer Straße angebracht wird.

Es ist Aufgabe der vorliegenden Erfindung ein flexibles, mit geringem Aufwand implementierbares Lokalisierungssystem und Lokalisierungsverfahren anzugeben. Es ist weiterhin Aufgabe der Erfindung einen mobilen Positionsdatensender zur Realisierung des Lokalisierungssystems und -verfahrens anzugeben.

Gelöst wird diese Aufgabe durch ein Lokalisierungssystem mit den Merkmalen des Patentanspruchs 1, durch ein Lokalisierungsverfahren mit den Merkmalen des Patentanspruchs 7 sowie durch eine mobile Lokalisierungseinnichtung mit den Merkmalen des Patentanspruchs 9.

Das erfindungsgemäße Lokalisierungssystem verfügt über einen mobilen Positionsdatensender mit einer Positions-Erfassungseinrichtung zum Erfassen mindestens einer dem Positionsdatensender zugeordneten Position und zum Ableiten von Positionsdaten aus der mindestens einen erfassten Position. Die Positionserfassung kann hierbei zum Beispiel durch Eingabe einer Raum- oder Schreibtischnummer an der Positions-Erfassungseinrichtung, oder auf funkbasierte Weise, zum Beispiel mittels Mobilfunk, GPS, Wireless LAN oder Bluetooth erfolgen. Der mobile Positionsdatensender weist weiterhin eine Funketiketten-Beschreibeinrichtung zum drahtlosen Ausstrahlen der abgeleiteten Positionsdaten mit einem Schreibsignal zum Beschreiben von Funketiketten auf. Das Lokalisierungssystem verfügt darüber hinaus über räumlich zu verteilende Funketiketten, jeweils mit einem Speicher zum Abspeichern einer Lokalisierungsinformation, die den mit dem Schreibsignal empfangenen Positionsdaten entnommen wird. Als Funketiketten können zum Beispiel so genannte RFID-Transponder (RFID: Radio Frequency Identification), häufig auch als RFID-Tag bezeichnet, verwendet werden, die sehr klein und kostengünstig hergestellt werden können. Das Lokalisierungssystem weist weiterhin eine Funketiketten-Leseeinrichtung zum Abrufen und Ausgeben der von mindestens einem in Abrufreichweite befindlichen Funketikett gespeicherten Lokalisierungsinformation auf.

Das erfindungsgemäße Lokalisierungssystem kann mit sehr geringem Einrichtungsaufwand an nahezu beliebigen Einsatzorten installiert werden. Bei den Funketiketten und deren Beschreib- bzw. Leseeinrichtung kann auf sehr kostengünstige Standardbauteile zurückgegriffen werden. Weiterhin erlaubt das erfindungsgemäße Lokalisierungssystem bei entsprechender räumlicher Verteilung der Funketiketten eine sehr hohe Lokalisierungsgenauigkeit. Darüber hinaus ist das Lokalisierungesystem durch einfaches Verteilen zusätzlicher Funketiketten auf sehr einfache Weise nahezu beliebig erweiterbar. Insbesondere kann sowohl eine zweidimensionale, auch eine dreidimensionale Positionsbestimmung vorgenommen werden.

Vorteilhafte Ausführungsformen und Weiterbildungen der Erfindung sind in den abhängigen Ansprüchen angegeben.

Erfindungsgemaß ist eine mit der Funketiketten-Leseeinrichtung gekoppelte Auswerteinrichtung vorgesehen, die zum Erfassen von von mehreren Funketiketten abgerufener Lokalisierungsinformation und zum Ableiten einer über diese Funketiketten gemittelten Positionsangabe aus der erfassten Lokalisierungsinformation dient. Hierbei kann zum Beispiel jeweils über diejenigen Funketiketten gemittelt werden, die sich zu einem jeweiligen Zeitpunkt, das heißt gleichzeitig, oder während eines vorgegebenen Zeitintervalls im Abruf- bzw. Empfangsbereich der Funketiketten-Leseeinrichtung befinden. Es können dabei unterschiedliche Mittelungsverfahren, wie zum Beispiel arithmetische, geometrische oder gewichtete Mittelung oder Kombinationen hiervon verwendet werden.

Nach einer vorteilhaften Ausführungsform der Erfindung kann der mobile Positionsdatensender zum fortlaufenden Erfassen seiner aktuellen Position und zum fortlaufenden Ausstrahlen der daraus abgeleiteten, fortlaufend aktualisierten Positionsdaten eingerichtet sein. Bei bewegtem Positionsdatensender werden damit fortlaufend Positionsdaten von zeitlich aufeinander folgenden Positionen des Positionsdatensenders ausgestrahlt.

Vorteilhafterweise können die Funketiketten eine Mittelungaeinrichtung aufweisen, um die abzuspeichernde Lokalisierungsinformation durch Mittelung über in regelmäßigen Zeitabständen empfangene Positionsdaten abzuleiten. Bei bewegtem Positionsdatensender entsprechen zu unterschiedlichen Zeitpunkten empfangene Positionsdaten den jeweiligen in Funkreichweite befindlichen Positionen des Positionsdatensenders zu diesen Zeitpunkten. Durch die Mittelung über mehrere innerhalb der Funkreichweite befindliche Positionen kann eine eigene Position eines jeweiligen Funketiketts genauer ermittelt und als Lokalisierungsinformation gespeichert werden. Als Mittelungsverfahren können zum Beispiel arithmetische, geometrische oder gewichtete Mittelbildungen oder Kombinationen hiervon verwendet werden.

Weiterhin können die Positions-Erfassungseinrichtung und die Funketiketten jeweils ein Verschlüsselungsmodul zum geschützten Übertragen der Positionsdaten und/oder zum geschützten Beschreiben der Funketiketten aufweisen. Auf diese Weise kann eine absichtliche oder unabsichtliche Verfälschung der Positionsdaten und/oder der Lokalisierungsinformation verhindert werden.

Vorzugsweise sind die Funketiketten in Abständen zu verteilen, die ungefähr der doppelten Abrufreichweite entsprechen oder kleiner sind. Auf diese Weise kann eine nahezu lückenlose Überdeckung des Lokalisierungsbereichs erreicht werden. Darüber hinaus kann durch eine dichtere Verteilung der Funketiketten die Lokalisierungsgenauigkeit erhöht werden.

Ein Ausführungsbeispiel der Erfindung wird nachfolgend anhand der Zeichnung näher erläutert.

Dabei zeigen jeweils in schematischer Darstellung:
- Figur 1: einen mobilen Positionsdatensender,
- Figur 2: ein Funketikett,
- Figur 3: eine mobile Lokalisierungseinrichtung,
- Figuren 4a-e: einen Lokalisierungsbereich beim Einrichten eines erfindungsgemäßen Lokalisierungssys- tems und
- Figur 5: den Lokalisierungsbereich beim Abrufen von Lokalisierungsinformation.

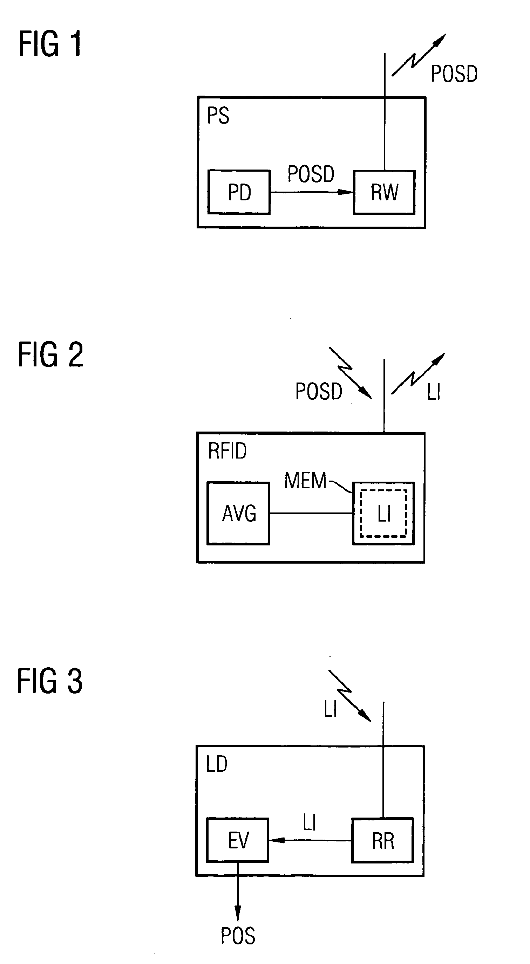

In Figur 1 ist ein mobiler Positionsdatensender PS mit einer Positions-Erfassungseinrichtung PD sowie einer Funketiketten-Beschreibeinrichtung RW schematisch dargestellt. Die Positions-Erfassungseinrichtung PD erfasst fortlaufend eine jeweils aktuelle örtliche Position des mobilen Positionsdatensenders PS und übermittelt fortlaufend aus den erfassten Positionen abgeleitete Positionsdaten POSD an die Funketiketten-Beschreibeinrichtung RW. Die Positionsdaten POSD geben die zeitlich aufeinander folgenden, aktuellen Positionen des mobilen Positionsdatensenders PS an. Die Positions-Erfassungseinrichtung PD kann diese Positionen zum Beispiel im Rahmen einer manuellen Eingabe einer Raum- oder Schreibtischnummer oder auf funkbasierte Weise, z.B. via GPS, durch Funkpeilung, durch Feldstärkemessungen etc. erfassen. Die Funketiketten-Beschreibeinrichtung RW kann vorzugsweise durch eine RFID-Beschreibeinrichtung (RFID: Radio Frequency Identification), häufig auch als RFID-Writer bezeichnet, realisiert werden. Durch eine derartige RFID-Beschreibeinrichtung können in Sendereichweite befindliche, beschreibbare RFID-Funketiketten mit Daten beschrieben werden. Erfindungsgemäß werden die von der Positions-Erfassungseinrichtung PD übermittelten Positionsdaten POSD durch die Funketiketten-Beschreibeinrichtung RW drahtlos mit einem Schreibsignal ausgestrahlt, das in Sendereichweite befindliche Funketiketten zum Abspeichern der Positionsdaten POSD veranlasst. Die Ausstrahlung der Positionsdaten POSD ist in Figur 1 durch einen stilisierten Blitz angedeutet.

Figur 2 zeigt ein Funketikett RFID mit einem Speicher MEM und einer damit gekoppelten Mittelungseinrichtung AVG in schematischer Darstellung. Das Funketikett RFID kann vorzugsweise als beschreibbares RFID-Etikett, häufig auch als RFID-Transponder oder RFID-Tag bezeichnet, realisiert sein. Beschreibbare und/oder mit Mikroprozessorfähigkeiten versehene RFID-Etiketten werden häufig auch als aktive bzw. intelligente RFID-Etiketten bezeichnet.

Ein Funketikett kann drahtlos mit der Funketiketten-Beschreibeinrichtung RW mit Daten beschrieben werden, die sich später wieder drahtlos mittels einer Funketiketten-Leseeinrichtung auslesen lassen. Das Funketikett RFID kann eine zum Betrieb erforderliche Energieversorgung einem von der Beschreib- bzw. Leseeinrichtung ausgestrahlten elektromagnetischen Feld entnehmen und/oder über eine eigene Energieversorgung, zum Beispiel durch Batterien, verfügen. Die Übertragungsreichweite beim Schreiben oder Lesen von Daten kann bei RFID-Etiketten von wenigen Millimetern bis in den Meterbereich reichen. Für das vorliegende Ausführungsbeispiel sei angenommen, dass das Funketikett RFID eine Übertragungsreichweite von ungefähr einem Meter aufweist. Das Funketikett RFID nimmt die vom Positionsdatensender PS ausgestrahlten Positionsdaten POSD in periodischen Zeitabständen auf, die im vorliegenden Ausführungsbeispiel eine Sekunde betragen sollen.

Die in Sekundenabständen aufgenommenen Positionsdaten POSD werden der Mittelungseinrichtung AVG zugeführt. Diese mittelt über während eines vorgegebenen Mittelungszeitintervalls zugeführte Positionsdaten und speichert den berechneten Mittelwert als Lokalisierungsinformation LI im Speicher MEM ab. Im vorliegenden Ausführungsbeispiel sei ein Mittelungszeitintervall von 5 Sekunden angenommen. Das Mittelungsverfahren ist vorzugsweise derart ausgestaltet, dass die Lokalisierungsinformation LI die eigene Position des Funketiketts RFID abhängig von der Bewegung des mobilen Positionsdatensenders PS möglichst genau angibt.

Die gespeicherte Lokalisierungsinformation LI kann später durch eine mobile Lokalisierungseinrichtung LD abgerufen werden, die in Figur 3 schematisch dargestellt ist. Die mobile Lokalisierungseinrichtung LD weist eine mobile Funketiketten-Leseeinrichtung RR sowie eine damit gekoppelte Auswerteeinrichtung EV auf. Die Funketiketten-Leseeinrichtung RR dient zum drahtlosen Abrufen von in Funketiketten gespeicherten Daten, hier der Lokalisierungsinformation LI. Die Funketiketten-Leseeinrichtung RR kann vorzugsweise durch ein RFID-Lesegerät, häufig auch als RFID-Sensor oder RFID-Reader bezeichnet, realisiert werden. Die mobile Lokalisierungseinrichtung LD kann zum Beispiel in einem PDA (Personal Digital Assistant) oder in einem Mobiltelefon integriert sein.

Die Funketiketten-Leseeinrichtung RR leitet die von in Abrufreichweite befindlichen Funketiketten empfangene Lokalisierungsinformation LI der Auswerteeinrichtung EV zu. Die Auswerteeinrichtung EV verfügt über eine Mittelungseinrichtung, durch die im vorliegenden Ausführungsbeispiel über die Lokalisierungsinformationen derjenigen Funketiketten gemittelt wird, die sich zu einem jeweiligen Zeitpunkt gleichzeitig in Abfragereichweite befinden. Aus dem berechneten Mittelwert wird durch die Auswerteeinrichtung EV eine Positionsangabe POS abgeleitet und ausgegeben, die die eigene Position der mobilen Lokalisierungseinrichtung LD mit hoher Genauigkeit angibt.

Alternativ zu einer Integration der Auswerteeinrichtung EV in der mobilen Lokalisierungseinrichtung LD kann auch vorgesehen sein, dass die Funketiketten-Leseeinrichtung RR die empfangenen Lokalisierungsinformationen LI an einen externen Auswertedienst (nicht dargestellt) weiterleitet.

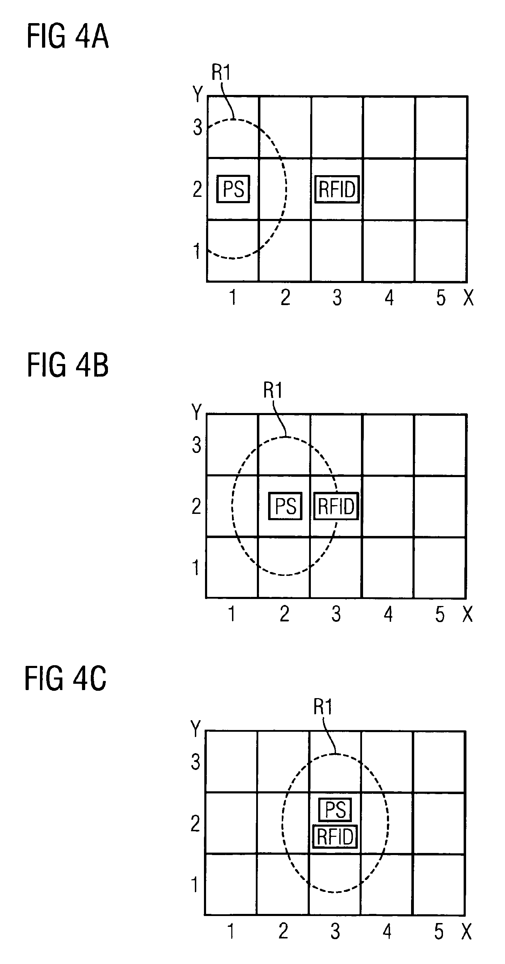

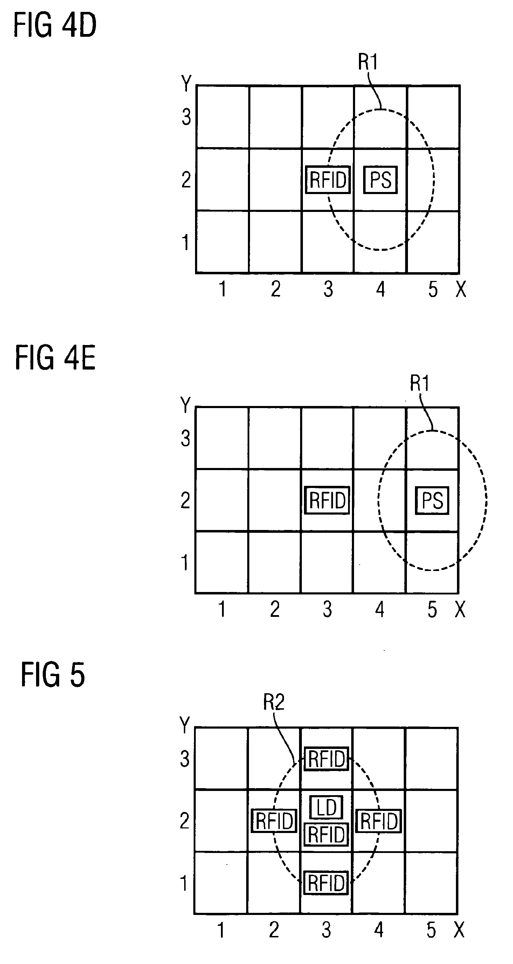

In den Figuren 4a bis 4e und Figur 5 ist jeweils ein mit schematisierten Koordinaten X und Y versehener, räumlicher Bereich, zum Beispiel eine Büroumgebung, in dem eine erfindungsgemäße Lokalisierung ermöglicht werden soll, skizziert. Der dargestellte räumliche Bereich wird im Folgenden als Lokalisierungsbereich bezeichnet. Der Lokalisierungsbereich ist beispielhaft in Lokalisierungszellen unterteilt, die jeweils anhand ihrer Position durch ein entsprechendes Koordinatenpaar (X-Koordinate, Y-Koordinate) spezifiziert werden. Im vorliegenden Ausführungsbeispiel hat die X-Koordinate einen Wertebereich von eins bis fünf und die Y-Koordinate einen Wertebereich von eins bis drei. Die Koordinatenwerte können zum Beispiel Orts- oder Abstandswerte in einem flächenhaften oder räumlichen Bezugsystem, Raumnummern, Schreibtischnummern oder Kombinationen aus derartigen Größen sein.

Für das vorliegende Ausführungsbeispiel sei angenommen, dass der Abstand der Lokalisierungszellen ungefähr der Übertragungsreichweite des Funketiketts RFID, hier einem Meter, entspricht. Weiterhin sei angenommen, dass Funketiketten, wie das im Zusammenhang mit Figur 2 beschriebene, derart über den gesamten Lokalisierungsbereich verteilt werden, dass sich in jeder Lokalisierungszelle ein Funketikett befindet. Die Übertragungsbereiche der Funketiketten überdecken somit den Lokalisierungsbereich vollständig. Insbesondere befinden sich an jedem Punkt des Lokalisierungsbereiches mehrere Funketiketten in Übertragungsreichweite. Auf Grund der sehr geringen Kosten von aktiven Funketiketten können Büroumgebungen auch sehr engmaschig mit Funketiketten ausgelegt werden.

Aus Übersichtlichkeitsgründen ist in den Figuren 4a bis 4e jeweils nur das in der Lokalisierungszelle mit den Koordinaten (X = 3, Y = 2) befindliche Funketikett RFID explizit dargestellt.

In Figur 5 sind nur diejenigen der Funketiketten RFID dargestellt, die sich innerhalb der Abrufreichweite der mobilen Lokalisierungseinrichtung LD befinden.

Zur Einrichtung des erfindungsgemäßen Lokalisierungssystems können die Funketiketten RFID in unbeschriebenem oder zumindest wiederbeschreibbarem Zustand durch einen Servicetechniker, beispielsweise durch Aufkleben unter Bodenplatten oder Schreibtischen in einer Büroumgebung verteilt werden. Die Verteilungsdichte entspricht vorzugsweise ungefähr der Übertragungsreichweite der Funketiketten RFID. Die erreichbare Lokalisierungsgenauigkeit entspricht in etwa der Verteilungsdichte der Funketiketten RFID, die sich wiederum an deren Übertragungsreichweite orientiert. Somit impliziert eine geringe Übertragungsreichweite der Funketiketten RFID von ungefähr einem Meter und darunter eine entsprechende hohe Lokalisierungsgenauigkeit.

In den Figuren 4a bis 4e ist schematisch dargestellt, wie der mobile Positionsdatensender PS durch den Lokalisierungsbereich von der Lokalisierungszelle (X = 1, Y = 2) bis zur Lokalisierungszelle (X = 5, Y = 2) bewegt wird. Der Positionsdatensender PS beschreibt dabei die über den Lokalisierungsbereich verteilten Funketiketten RFID, die sich in seiner Sendereichweite R1 befinden, mit Positionsdaten POSD, die seine jeweilige aktuelle Position angeben. Das Beschreiben aller über den Lokalisierungsbereich verteilten Funketiketten RFID kann besonders einfach z.B. dadurch realisiert werden, dass ein Servicetechniker mit dem mobilen Positionsdatensender PS den Lokalisierungsbereich flächendeckend abschreitet. Im Hinblick auf die unten beschriebene Mittelung der Positionsdaten POSD in einem jeweiligen Funketikett RFID ist es vorteilhaft, wenn der Positionsdatensender PS im Lokalisierungsbereich mit möglichst gleichbleibender Geschwindigkeit bewegt wird. Der Positionsdatensender PS sendet dabei fortlaufend aktuelle Positionsdaten POSD, die von den in Sendereichweite R1 befindlichen Funketiketten RFID jeweils in periodischen Zeitabständen, hier eine Sekunde, aufgenommen werden. Über die aufgenommenen Positionsdaten POSD wird in einem jeweiligen Funketikett RFID ein Mittelwert gebildet, der als Lokalisierungsinformation LI abgespeichert wird. Durch die Mittelung wird die Genauigkeit, mit der die abgespeicherte Lokalisierungsinformation LI die eigene Position des jeweiligen Funketiketts RFID wiedergibt, wesentlich erhöht, da die Bestimmung auf mehreren Positionsdaten basiert.

Der Mittelungs- und Beschreibvorgang wird nachfolgend am Beispiel des in der Lokalisierungszelle (X = 3, Y = 2) befindlichen Funketikett RFID anhand der Figuren 4a bis 4e beschrieben. Es sei angenommen, dass der Positionsdatensender PS von der Lokalisierungszelle (X = 1, Y = 2) über die Lokalisierungszellen (X = 2, Y = 2), (X = 3, Y = 2), (X = 4, Y = 2) in die Lokalisierungszelle (X = 5, Y = 2) bewegt wird. Es sei dabei weiter angenommen, dass der Positionsdatensender PS jeweils eine Sekunde benötigt, um von einer Lokalisierungszelle in die nächste Lokalisierungszelle zu gelangen. Die Figuren 4a bis 4e veranschaulichen entsprechend im Sekundenabstand aufeinander folgende Positionen des Positionsdatensenders PS.

In Figur 4a befindet sich der Positionsdatensender PS in der Lokalisierungszelle (X = 1, Y = 2). Der Positionsdatensender PS strahlt zwar die seiner aktuellen Position entsprechende Positionsdaten POSD mit dem Schreibsignal aus, doch empfängt das dargestellte Funketikett RFID diese Positionsdaten POSD noch nicht, da es sich außerhalb der Sendereichweite R1 des Positionsdatensenders PS befindet. Die Sendereichweite R1 entspricht im vorliegenden Ausführungsbeispiel der Übertragungsreichweite des Funketiketts RFID.

In Figur 4b befindet sich der Positionsdatensender PS in der Lokalisierungszelle (X = 2, Y = 2) und strahlt dementsprechend seine Position (X = 2, Y = 2) angebende Positionsdaten POSD zusammen mit dem Schreibsignal aus. Das Funketikett RFID liegt nun innerhalb der Reichweite R1 des Positionsdatensenders PS und empfängt somit die ausgestrahlten Positionsdaten POSD und speichert die darin enthaltenen Positionskoordinaten (X = 2, Y = 2) zur nachfolgenden Mittelwertbildung ab.

In Figur 4c befindet sich der Positionsdatensender PS in der Lokalisierungszelle (X = 3, Y = 2) und strahlt entsprechende Positionsdaten POSD aus. Das in derselben Lokalisierungszelle befindliche Funketikett RFID empfängt die ausgestrahlten Positionsdaten POSD und speichert die darin enthaltenen Positionskoordinaten (X = 3, Y = 2) ab. Aus den bisher empfangenen Positionskoordinaten wird ein Mittelwert berechnet, der sich im vorliegenden Ausführungsbeispiel zu (X = 2.5, Y = 2) ergibt.

In Figur 4d befindet sich der Positionsdatensender PS in der Lokalisierungszelle (X = 4, Y = 2), so dass das in Reichweite R1 befindliche Funketikett RFID mit den ausgestrahlten Positionsdaten POSD die Positionskoordinaten (X = 4, Y = 2) empfängt. Diese Positionskoordinaten werden mit den bisher empfangenen Positionskoordinaten gemittelt, was im vorliegenden Ausführungsbeispiel einen Mittelwert von (X = 3, Y = 2), also die genaue Position des Funketiketts RFID ergibt.

In Figur 4e befindet sich der Positionsdatensender PS in der Lokalisierungszelle (X = 5, Y = 2), so dass sich das Funketikett RFID wieder außerhalb der Sendereichweite R1 befindet. Nach Ablauf einer vorgegebenen Zeitspanne, in der keine weiteren Positionsdaten im Funketikett RFID empfangen werden, speichert dieses den zuletzt berechneten Mittelwert (X = 3, Y = 2) als Lokalisierungsinformation LI im Speicher MEM ab.

Auf die vorstehend beschriebene Weise werden alle im Lokalisierungsbereich befindlichen Funketiketten mit einer deren jeweilige Position spezifizierenden Lokalisierungsinformation LI beschrieben. Anschließend kann die Lokalisierungsinformation LI der beschriebenen Funketiketten durch die mobile Lokalisierungseinrichtung LD ausgelesen werden, um deren eigene Position mit hoher Genauigkeit zu ermitteln.

Die Positionsermittlung der mobilen Lokalisierungseinrichtung LD wird durch Figur 5 veranschaulicht. Aus Übersichtlichkeitsgründen sind in Figur 5 nur die in der Lokalisierungszelle (X = 3, Y = 2) befindliche mobile Lokalisierungseinrichtung LD sowie die in deren Abrufreichweite R2 befindlichen Funketiketten RFID abgebildet. Die Abrufreichweite R2 entspricht im vorliegenden Ausführungsbeispiel der Übertragungsreichweite der Funketiketten RFID und damit der Sendereichweite R1 des mobilen Positionsdatensenders PS.

Die mobile Lokalisierungseinrichtung LD strahlt ein Abrufsignal aus, das die in Abrufreichweite R2 befindlichen Funketiketten RFID dazu veranlasst, jeweils deren gespeicherte Lokalisierungsinformation LI zur mobilen Lokalisierungseinrichtung LD zu übertragen. Für das vorliegende Ausführungsbeispiel sei angenommen, dass die in einem jeweiligen Funketikett RFID gespeicherte Lokalisierungsinformation LI der Koordinatenposition dieses Funketiketts RFID entspricht.

Die mobile Lokalisierungseinrichtung LD empfängt also mit der jeweiligen Lokalisierungsinformation LI die Positionskoordinaten (X = 3, Y = 3), (X = 2, Y = 2), (X = 3, Y = 2), (X = 4, Y = 2) und (X = 3, Y = 1) der gleichzeitig in Abrufreichweite R2 befindlichen Funketiketten RFID. Die empfangenen Positionskoordinaten werden von der Funketiketten-Leseeinrichtung RR der Auswerteeinrichtung EV zugeführt. Die Auswerteeinrichtung EV mittelt über die empfangenen Positionskoordinaten und gibt den resultierenden arithmetischen Mittelwert (X = 3, Y = 2) als Positionsangabe POS aus. Die gemittelte Positionsangabe POS entspricht im vorliegenden Ausführungsbeispiel genau der tatsächlichen Position der mobilen Lokalisierungseinrichtung LD im Lokalisierungsbereich.

Auf Grund der Mittelwertbildung gibt die gemittelte Positionsangabe POS auch in weniger idealen Umgebungen die tatsächliche Position der mobilen Lokalisierungseinrichtung LD mit hoher Genauigkeit wieder. Die Lokalisierungsgenauigkeit kann noch weiter erhöht werden, wenn die Auswerteausrichtung EV auch zu unterschiedlichen Zeitpunkten empfangene Lokalisierungsinformationen dazu benutzt, die Position der Lokalisierungseinrichtung LD durch eine Art Triangulierung über mehrere Funketikettenpositionen zu bestimmen.

Bei einer Verteilung der Funketiketten RFID in Abständen, die in etwa ihrer Übertragungsreichweite entsprechen, ist das erfindungsgemäße Lokalisierungssystem sehr fehlertolerant. Auch bei Ausfall einzelner weniger Funketiketten RFID verbleiben in der Regel noch genügend Funketiketten, um flächendeckend einen Abruf der Lokalisierungsinformation und damit eine Positionsbestimmung der mobilen Lokalisierungseinrichtung LD zu gewährleisten. Ein Ausfall einzelner Funketiketten RFID kann zudem auf einfache Weise erkannt werden, indem aktuell ermittelte Positionsangaben POS mit früher an derselben Position ermittelten Positionsangaben POS verglichen werden. Ein Ausfall eines Funketiketts RFID innerhalb der Abrufreichweite würde sich in einer kleinen Abweichung des Mittelwerts bemerkbar machen. Darauf basierend kann das erfindungsgemäße Lokalisierungssystem auf einfache Weise um Mittel zur Eigendiagnose erweitert werden.

## Patentansprüche

1. Lokalisierungssystem mit
a) einem mobilen Positionsdatensender (PS) mit
i) einer Positions-Erfassungseinrichtung (PD) zum Erfassen mindestens einer dem Positionsdatensender (PS) zugeordneten Position und zum Ableiten von Positionsdaten (POSD) aus der mindestens einen erfassten Position, und
ii) einer Funketiketten-Beschreibeinrichtung (RW) zum drahtlosen Ausstrahlen der abgeleiteten Positionsdaten (POSD) mit einem Schreibsignal zum Beschreiben von Funketiketten (RFID),
b) räumlich zu verteilenden Funketiketten (RFID) jeweils mit einem Speicher (MEM) zum Abspeichern einer den mit dem Schreibsignal empfangenen Positionsdaten (POSD) entnommenen Lokalisierungsinformation (LI), und
c) einer Funketiketten-Leseeinrichtung (RR) zum Abrufen und Ausgeben der von mindestens einem in Abrufreichweite (R2) befindlichen Funketikett (RFID) gespeicherten Lokalisierungsinformation (LI),
**gekennzeichnet durch**
eine mit der Funketiketten-Leseeinrichtung (RR) gekoppelte Auswerteeinrichtung (EV) zum Erfassen von von mehreren Funketiketten (RFID) abgerufener Lokalisierungsinformation (LI) und zum Ableiten einer über diese Funketiketten (RFID) gemittelten Positionsangabe (POS) aus der erfassten Lokalisierungsinformation (LI).

2. Lokalisierungssystem nach Anspruch 1,
**dadurch gekennzeichnet,**
**dass** der mobile Positionsdatensender (PS) zum fortlaufenden Erfassen seiner aktuellen Position und zum fortlaufenden Ausstrahlen der daraus abgeleiteten, fortlaufend aktualisierten Positionsdaten (POSD) eingerichtet ist.

3. Lokalisierungssystem nach Anspruch 2,
**dadurch gekennzeichnet,**
**dass** die Funketiketten (RFID) eine Mittelungseinrichtung (AVG) aufweisen zum Ableiten der Lokalisierungsinformation (LI) durch Mittelung über in regelmäßigen Zeitabständen empfangene Positionsdaten (POSD).

4. Lokalisierungssystem nach einem der vorhergehenden Ansprüche,
**dadurch gekennzeichnet,**
**dass** die Positions-Erfassungseinrichtung (PD) und die Funketiketten (RFID) jeweils ein Verschlüsselungsmodul zum geschützten Übertragen der Positionsdaten (POSD) und/oder zum geschützten Beschreiben der Funketiketten (RFID) aufweisen.

5. Lokalisierungssystem nach einem der vorhergehenden Ansprüche,
**dadurch gekennzeichnet,**
**dass** die Funketiketten (RFID) in Abständen verteilt sind, die ungefähr der doppelten Abrufreichweite (R2) entsprechen oder kleiner sind.

6. Lokalisierungssystem nach Anspruch 5,
**dadurch gekennzeichnet,**
**dass** die Funketiketten (RFID) in Abständen verteilt sind, die in etwa ihrer Übertragungsreichweite entsprechen.

7. Lokalisierungsverfahren, bei dem
a)durch einen mobilen Positionsdatensender (PS) mindestens eine diesem zugeordnete Position erfasst wird und daraus abgeleitete Positionsdaten (POSD) mit einem Schreibsignal zum Beschreiben von Funketiketten (RFID) drahtlos ausgestrahlt werden,
b)durch mindestens ein das Schreibsignal empfangendes Funketikett (RFID) eine den Positionsdaten (POSD) entnommene Lokalisierungsinformation (LI) abgespeichert wird,
c)durch eine Funketiketten-Leseeinrichtung (RR) die von mindestens einem in dessen Abrufreichweite (R2) befindlichen Funketikett (RFID) gespeicherte Lokalisierungsinformation (LI) abgerufen und ausgegeben wird,
**dadurch gekennzeichnet, dass**
durch eine mit der Funketiketten-Leseeinrichtung (RR) gekoppelte Auswerteeinrichtung (EV) von von mehreren Funketiketten (RFID) abgerufene Lokalisierungsinformation (LI) erfasst wird und eine über diese Funketiketten (RFID) gemittelte Positionsangabe (POS) aus der erfassten Lokalisierungsinformation (LI) abgeleitet wird.

8. Lokalisierungsverfahren nach Anspruch 7,
**dadurch gekennzeichnet,**
**dass** die Funketiketten (RFID) in Abständen verteilt werden, die in etwa ihrer Übertragungsreichweite entsprechen und ein Ausfall einzelner Funketiketten (RFID) erkannt wird, indem aktuell ermittelte Positionsangaben (POS) mit früher an derselben Position ermittelten Positionsangaben (POS) verglichen werden.

9. Mobile Lokalisierungseinrichtung (LD) mit
a)einer Funketiketten-Leseeinrichtung (RR) zum Abrufen von in Funketiketten (RFID) gespeicherter Lokalisierungsinformation (LI), und
b)einer mit der Funketiketten-Leseeinrichtung (RR) gekoppelten Auswerteeinrichtung (EV) zum Erfassen von von mehreren Funketiketten (RFID) abgerufener Lokalisierungsinformation (LI) und zum Ableiten einer über diese Funketiketten (RFID) gemittelten Positionsangabe (POS) aus der erfassten Lokalisierungsinformation (LI).

10. Mobile Lokalisierungseinrichtung (LD) nach Anspruch 9,
**dadurch gekennzeichnet,**
**dass** die Auswerteeinrichtung (EV) über eine Mittelungseinrichtung verfügt, die derart eingerichtet ist, dass über die Lokalisierungsinformationen (LI) derjenigen Funketiketten (RFID) mittelbar ist, die sich zu einem jeweiligen Zeitpunkt gleichzeitig in Abfragereichweite befinden.

11. Mobile Lokalisierungseinrichtung (LD) nach Anspruch 10,
**dadurch gekennzeichnet,**
**dass** aus dem berechneten Mittelwert durch die Auswerteeinrichtung (EV) eine Positionsangabe (POS) ableitbar und ausgebbar ist, die die eigene Position der mobilen Lokalisierungseinrichtung (LD) angibt.

12. Mobile Lokalisierungseinrichtung (LD) nach einem der Ansprüche 9 bis 11,
**dadurch gekennzeichnet,**
**dass** die mobile Lokalisierungseinrichtung (LD) in einem PDA (Personal Digital Assistant) oder in einem Mobiltelefon integriert ist.

13. Mobile Lokalisierungseinrichtung (LD) nach einem der Ansprüche 9 bis 11,
**dadurch gekennzeichnet,**
**dass** die Funketiketten-Leseeinrichtung (RR) derart eingerichtet ist, dass die empfangene Lokalisierungsinformation (LI) an einen externen Auswertedienst weiterleitbar ist.

14. Mobile Lokalisierungseinrichtung (LD) nach einem der Ansprüche 9 bis 13,
**dadurch gekennzeichnet,**
**dass** die Abrufreichweite (R2) der mobilen Lokalisierungseinrichtung (LD) der Übertragungsreichweite der Funketiketten (RFID) entspricht.

15. Mobile Lokalisierungseinrichtung (LD) nach einem der Ansprüche 9 bis 14,
**dadurch gekennzeichnet,**
**dass** die mobile Lokalisierungseinrichtung (LD) derart eingerichtet ist, dass ein Abrufsignal ausstrahlbar ist, das die in Abrufreichweite (R2) der mobilen Lokalisierungseinrichtung (LD) befindlichen Funketiketten (RFID) dazu veranlasst, jeweils deren gespeicherte Lokalisierungsinformation (LI) zur mobilen Lokalisierungseinrichtung (LD) zu übertragen.

## Claims

1. Localisation system comprising
a) a mobile position data transmitter (PS) having
i) a position capture device (PD) for capturing at least one position assigned to the position data transmitter (PS) and for deriving position data (POSD) from the at least one captured position, and
ii) a radio tag writer (RW) for the wireless broadcasting of the derived position data (POSD) with a write signal for the writing of radio tags (RFID),
b) radio tags (RFID) for distribution within a space, wherein each radio tag has a memory (MEM) for storing localisation information (LI) obtained from position data (POSD) received with the write signal, and
c) a radio tag reader (RR) for retrieving and outputting the stored localisation information (LI) of at least one radio tag (RFID) situated in retrieval range (R2), **characterised by** an evaluator (EV) coupled to the radio tag reader (RR) for capturing localisation information (LI) retrieved from a plurality of radio tags (RFID) and for deriving from the captured localisation information (LI) a position indication (POS) averaged over these radio tags (RFID).

2. Localisation system according to claim 1, **characterised in that** the mobile position data transmitter (PS) is configured for the continuous capture of its current position and for continuously broadcasting the continuously refreshed position data (POSD) derived therefrom.

3. Localisation system according to claim 2,**characterised in that** the radio tags (RFID) exhibit an averaging device (AVG) for deriving the localisation information (LI) by averaging over position data (POSD) received at regular intervals.

4. Localisation system according to any of the preceding claims, **characterised in that** the position capture device (PD) and the radio tags (RFID) each exhibit an encryption module for the secure transmission of the position data (POSD) and/or for the secure writing of the radio tags (RFID).

5. Localisation system according to any of the preceding claims, **characterised in that** the radio tags (RFID) are spaced at intervals which approximately correspond to or are less than twice the retrieval range (R2).

6. Localisation system according to claim 5, **characterised in that** the radio tags (RFID) are spaced at intervals which approximately correspond to their transmission range.

7. Localisation method wherein
a) a mobile position data transmitter (PS) captures at least one position assigned to it, and position data (POSD) derived from said position are wirelessly broadcast with a write signal for writing radio tags (RFID),
b) at least one radio tag (RFID) receiving the write signal stores localisation information (LI) that is taken from the position data (POSD),
c) a radio tag reader (RR) retrieves and outputs the localisation information (LI) stored by at least one radio tag (RFID) present within its retrieval range (R2), **characterised in that** localisation information (LI) retrieved from a plurality of radio tags (RFID) is captured by an evaluator (EV) coupled to the radio tag reader (RR) and **in that** a position indication (POS) averaged over these radio tags (RFID) is derived from the captured localisation information (LI).

8. Localisation method according to claim 7, **characterised in that** the radio tags (RFID) are spaced at intervals which approximately correspond to their transmission range and a failure of individual radio tags (RFID) is detected by currently determined position indications (POS) being compared with position indications (POS) previously determined at the same position.

9. Mobile localisation device (LD) having
a) a radio tag reader (RR) for retrieving localisation information (LI) stored in radio tags (RFID), and
b) an evaluator (EV) coupled to the radio tag reader (RR) for capturing localisation information (LI) retrieved from a plurality of radio tags (RFID) and for deriving from the captured localisation information (LI) a position indication (POS) averaged over these radio tags (RFID).

10. Mobile localisation device (LD) according to claim 9, **characterised in that** the evaluator (EV) has an averaging device which is configured such that averaging is possible over the localisation information (LI) of those radio tags (RFID) which are simultaneously situated in retrieval range at a point in time concerned.

11. Mobile localisation device (LD) according to claim 10, **characterised in that**, from the calculated average, the evaluator (EV) can derive and output a position indication (POS) which indicates the own position of the mobile localisation device (LD).

12. Mobile localisation device (LD) according to any of claims 9 to 11, **characterised in that** the mobile localisation device (LD) is incorporated in a PDA (Personal Digital Assistant) or in a mobile phone.

13. Mobile localisation device (LD) according to any of claims 9 to 11, **characterised in that** the radio tag reader (RR) is configured such that the received localisation information (LI) can be forwarded to an external evaluation service.

14. Mobile localisation device (LD) according to any of claims 9 to 13, **characterised in that** the retrieval range (R2) of the mobile localisation device (LD) corresponds to the transmission range of the radio tags (RFID).

15. Mobile localisation device (LD) according to any of claims 9 to 14, **characterised in that** the mobile localisation device (LD) is configured such that a retrieval signal which causes the radio tags (RFID) situated in retrieval range (R2) of the mobile localisation device (LD) to transmit their stored localisation information (LI) to the mobile localisation device (LD) can be broadcast.

## Revendications

1. Système de localisation doté
a) d'un émetteur de données de position mobile (PS) équipé
i) d'un système de détection de position (PD) servant à détecter au moins une position attribuée à l'émetteur de données de position (PS) et à déduire des données de position (POSD) à partir de la ou des positions détectées, et
ii) d'un système d'écriture d'étiquette d'identification par radiofréquence (RW) servant à la diffusion sans fil des données de position (POSD) déduites avec un signal d'écriture servant à écrire des étiquettes d'identification par radiofréquence (RFID),
b) d'étiquettes d'identification par radiofréquence (RFID) à répartir dans un espace, dotées chacune d'une mémoire (MEM) permettant de stocker une information de localisation (LI) extraite des données de position (POSD) reçues avec le signal d'écriture, et
c) d'un système de lecture d'étiquettes d'identification par radiofréquence (RR) servant à appeler et fournir l'information de localisation (LI) stockée par au moins une étiquette d'identification par radiofréquence (RFID) se trouvant dans la portée d'appel (R2),
**caractérisé par**
un système d'évaluation (EV), couplé au système de lecture d'étiquettes d'identification par radiofréquence (RR), permettant de détecter une information de localisation (LI) appelée par plusieurs étiquettes d'identification par radiofréquence (RFID) et de déduire une indication de position (POS) moyenne calculée par le biais de ces étiquettes d'identification par radiofréquence (RFID) à partir de l'information de localisation (LI) détectée.

2. Système de localisation selon la revendication 1,
**caractérisé en ce que**,
l'émetteur de données de position mobile (PS) est agencé pour détecter en continu sa position actuelle et pour diffuser en continu les données de position (POSD) qui en sont déduites et sont actualisées en continu.

3. Système de localisation selon la revendication 2,
**caractérisé en ce que**
les étiquettes d'identification par radiofréquence (RFID) comportent un système de calcul de moyenne (AVG) pour déduire l'information de localisation (LI) en calculant la moyenne par le biais des données de position (POSD) reçues à des intervalles de temps réguliers.

4. Système de localisation selon l'une quelconque des revendications précédentes,
**caractérisé en ce que**,
le système de détection de position (PD) et les étiquettes d'identification par radiofréquence (RFID) comportent respectivement un module de chiffrement permettant une transmission protégée des données de position (POSD) et/ou permettant une écriture protégée des étiquettes d'identification par radiofréquence (RFID).

5. Système de localisation selon l'une quelconque des revendications précédentes,
**caractérisé en ce que**,
les étiquettes d'identification par radiofréquence (RFID) sont réparties à des distances qui correspondent à peu près au double de la portée d'appel (R2) ou qui sont plus petites que le double.

6. Système de localisation selon la revendication 5,
**caractérisé en ce que**,
les étiquettes d'identification par radiofréquence (RFID) sont réparties à des distances qui correspondent environ à leur portée de transmission.

7. Procédé de localisation, dans lequel
a) un émetteur de données de position mobile (PS) détecte au moins une position qui lui est attribuée et des données de position (POSD) qui en sont déduites sont radiodiffusées avec un signal d'écriture servant à écrire des étiquettes d'identification par radiofréquence (RFID),
b) une information de localisation (LI) extraite des données de position (POSD) est stockée par au moins une étiquette d'identification par radiofréquence (RFID) recevant le signal d'écriture,
c) un système de lecture d'étiquettes d'identification par radiofréquence (RR) appelle et émet l'information de localisation (LI) stockée par au moins une étiquette d'identification par radiofréquence (RFID) se trouvant dans sa portée d'appel (R2),
**caractérisé en ce que**
une information de localisation (LI) appelée par plusieurs étiquettes d'identification par radiofréquence (RFID) est détectée par un système d'évaluation (EV) couplé au système de lecture d'étiquettes d'identification par radiofréquence (RR) et une indication de position (POS) moyenne calculée par le biais de ces étiquettes d'identification par radiofréquence (RFID) est déduite de l'information de localisation (LI) détectée.

8. Procédé de localisation selon la revendication 7,
**caractérisé en ce que**,
les étiquettes d'identification par radiofréquence (RFID) sont réparties à des distances qui correspondent à peu près à leur portée de transmission et **en ce qu'**une panne de différentes étiquettes d'identification par radiofréquence (RFID) est reconnue par le fait que des indications de position (POS) actuellement déterminées sont comparées à des indications de position (POS) déterminées plutôt à la même position.

9. Système de localisation mobile (LD) doté
a) d'un système de lecture d'étiquettes d'identification par radiofréquence (RR) permettant d'appeler une information de localisation (LI) enregistrée dans des étiquettes d'identification par radiofréquence (RFID), et
b) d'un système d'évaluation (EV) couplé au système de lecture d'étiquettes d'identification par radiofréquence (RR) afin de détecter une information de localisation (LI) appelée par plusieurs étiquettes d'identification par radiofréquence (RFID) et pour déduire une indication de position (POS) moyenne calculée par le biais de ces étiquettes d'identification par radiofréquence (RFID) à partir de l'information de localisation (LI) détectée.

10. Système de localisation mobile (LD) selon la revendication 9,
**caractérisé en ce que**,
le système d'évaluation (EV) dispose d'un système de calcul de moyenne qui est agencé de manière telle que l'indication de position (POS) moyenne puisse être calculée par le biais des informations de localisation (LI) des étiquettes d'identification par radiofréquence (RFID) qui se trouvent à un instant donné en même temps dans la portée d'interrogation.

11. Système de localisation mobile (LD) d'après la revendication 10,
**caractérisé en ce que**,
à partir de la valeur moyenne calculée, le système d'évaluation (EV) peut déduire et fournir une indication de position (POS) qui indique la position du système de localisation mobile (LD).

12. Système de localisation mobile (LD) selon une des revendications 9 à 11,
**caractérisé en ce que**,
le mobile système de localisation (LD) est intégré dans un assistant numérique personnel (PDA - Personal Digital Assistant) ou dans un téléphone portable.

13. Système de localisation mobile (LD) selon une des revendications 9 à 11,
**caractérisé en ce que**,
le système de lecture d'étiquettes d'identification par radiofréquence (RR) est agencé de manière telle que l'information de localisation (LI) reçue puisse être transmise à un service d'évaluation externe.

14. Système de localisation mobile (LD) selon une des revendications 9 à 13,
**caractérisé en ce que**,
la portée d'appel (R2) du système de localisation (LD) mobile correspond à la portée de transmission des étiquettes d'identification par radiofréquence (RFID).

15. Système de localisation mobile (LD) selon une des revendications 9 à 14,
**caractérisé en ce que**,
le système de localisation mobile (LD) est agencé de manière telle qu'il soit possible de diffuser un signal d'appel qui fait en sorte que les étiquettes d'identification par radiofréquence (RFID) se trouvant dans la portée d'appel (R2) du système de localisation mobile (LD) transmettent chacune leur information de localisation (LI) stockée au système de localisation mobile (LD).
